# EUROPEAN PATENT APPLICATION

(11) **EP 1 004 921 A1**
(43) Date of publication of application: **31.05.2000**
(21) Application number: 98940723.4
(22) Date of filing: 03.08.1998
(51) Int. Cl.: G02F 1/1335, G02F 1/13

(54) **LIQUID CRYSTAL DISPLAY**

(30) Priority: 04.08.1997 RU 97113277
(71) Applicant: Optiva, Inc., San Mateo, CA 94402 (US)
(72) Inventor: LAZAREV, Pavel Ivanovich, Moscow, 119633 (RU); BELAYEV,Sergei Vasilievich, g.Dolgoprudny, Moskovskaya obl.141700 (RU)
(74) Representative: Kidd, Piers Burgess
(86) International application number: RU9800250
(87) International publication number: WO9906884

(57) **Abstract**

The invention belongs to display units, in particular, to liquid crystal (LC) displays, and can be used in display/indicator equipment of various purposes, as well as in optical modulators, matrix systems for light modulation, etc. A liquid crystal display is proposed containing a layer of liquid crystal placed between the front and the back plates, with one electrode and one polarizer located on each of the plates, and a layer containing a dye. As the latter dye, either a single dye emitting luminescence under action of UV radiation in the range of 400-700 nm, or a mixture of one dye emitting luminescence and one absorbing dye, is used. The purpose of the invention is to achieve greater brightness and color saturation of the image, and to increase the viewing angle of LC displays up to 180° by more effectively utilizing the emission spectrum of the radiation source, in particular, its ultra-violet band.

## Description

This invention belongs to display units, in particular, to liquid crystal (LC) displays, and can be used in displays and indicators of various purposes, as well as in optical modulators, matrix light modulation systems etc.

Devices implemented as flat cuvettes formed by two parallel glass plates are known, with electrodes made of optically transparent electrically conductive material, e.g. indium or tin dioxide, deposited onto their internal surfaces. Surfaces of the plates along with the electrodes are specially processed, which ensures the required homogeneous orientation of liquid crystal molecules at the plate surfaces and in the bulk of the LC film. When the orientation is homogeneous, the large axes of liquid crystal molecules at the plate surfaces are located parallel to the orientation directions, which are usually chosen mutually perpendicular. After the cuvette is assembled, it is filled with the liquid crystal, which will then form a layer of 5-20 microns thickness. This layer is an active environment varying the optical properties (rotation angle of the polarization plane) under action of an electric field. The change of optical properties is registered in crossed polarizers, which are usually glued onto the external surfaces of the cuvettes [1]. Therefore, the sites of the display at which the electrodes are not subject to voltage are light-transmitting and look bright, while the sites of the display under action of the voltage look as dark areas. To create a color image on the display, a special layer is introduced colored with organic or inorganic dyes, the coloring patterns having the shapes of picture elements (character-generating or electronic-game indicators), or of light filter matrices of RGB or CMY types (matrix screens). The dyes ensure the appropriate coloring of light which is transmitted through the light filter element. The common fault of such type of devices is their low brightness and insufficient color saturation of the obtained image. One of the reasons is the use of dichroic polarizers of light absorbing up to 50-60% of light in the visible range, and, besides, partial absorption of the light flux by the dyes themselves. To achieve high color saturation, high light source brightness is then required, which is bound to increase energy consumption by the display. The increased energy consumption results in loss of advantages of LC displays as highly economical devices in comparison with alternative display units.

The second drawback of the known LC displays is the small viewing angle, since the multilayer design of the LC display allows to effectively control the light flux propagating to the front display surface only within a limited solid angle.

This invention aims to achieve higher brightness, color saturation of the image, and to increase the viewing angle of LC displays up to 180° by more efficiently utilizing the emission spectrum of the radiation source, in particular, its ultra-violet range.

The invention purpose is achieved by constructing a liquid crystal display containing a layer of liquid crystal placed between the front and the back plates, with at least one electrode and one polarizer located on each of the plates, and a layer containing at least one dye in at least one region, wherein a dye emitting luminescence under action of UV radiation in the range of 400-700 nm, or a mixture of at least one dye emitting luminescence and at least one dye absorbing but not emitting luminescence, is used as at least of one of the dyes.

In the general case, the claimed display will be able to work using emission from external sources, for example, sun radiation including that of UV range. However, a radiation source emitting in UV and visible spectral ranges can be included into the display design. It is relevant for the maximum of its emission to be in the range of 200-450 nm. The radiation source can be mounted from the side of either the front or the back plate. It is assumed that the radiation can be directed inside the display through either the front or the back plates using any suitable design, for example, through the front or the lateral surface of the plate.

In this design, the layer containing at least one dye emitting luminescence can be located on the external side of one of the plates, and then the polarizer located on the same plate can be placed either on its internal surface, or between its external surface and the layer containing at least one dye emitting luminescence. So it is essential that the polarizer should in both cases be located between the luminescent layer and the layer of liquid crystal. If the layer containing at least one dye emitting luminescence is located on the internal side of one of the plates, the polarizer located on the same plate should again be placed between the layer containing at least one dye emitting luminescence and the liquid crystal layer.

Apart from the transmissive display described above, the design of the reflective display can be obtained, which also uses the UV part of the source radiation. Then the reflector mounted on either the internal or the external side of the plate can be included into the display, the plate naturally becoming the back plate, because radiation from the source will not pass through it. It is relevant in this case to place the layer containing at least one luminescent dye on the back plate, between the reflector and the polarizer located on the same plate. If molecules of the dye in the layer containing at least one dye emitting luminescence are homogeneously oriented along at least one molecular axis, such a layer will acquire polarizing properties. Therefore, it is possible to place this layer on the front plate, and thus to avoid using a separate polarizer. In this case, the layer emitting luminescence and the polarizer located on the same plate actually turn out to be included into a single polarizing layer containing molecules of at least one dye emitting luminescence, with the molecules homogeneously oriented along at least one molecular axis. This polarizing layer can then be located on either external or internal side of the front plate.

The basis of the invention is explained by the drawing figures. In Figs. 1-4, LC displays of transmissive type are schematically presented with various locations of polarizers and layers of luminescent dye on the external and the internal sides of LC display plates.

In Figs. 5 and 6, an LC display of reflective type is schematically presented with external and internal location of the polarizers and the luminescent dye layers.

In Fig.7, a display is schematically presented in which the function of external polarizer is performed by a layer containing a dye emitting luminescence.

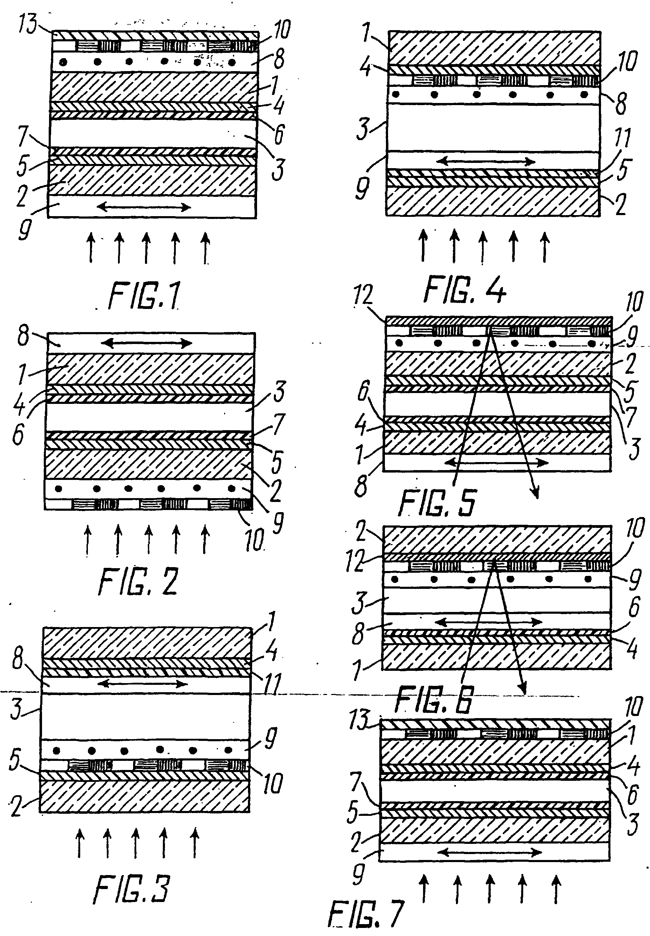

The LC display presented in Fig. 1 consists of two plates 1 and 2, which can be made of glass, plastic, or other either rigid or flexible material transparent in both visible and UV spectral regions. On the internal surfaces of these plates which are adjacent to the layer of nematic liquid crystal 3, transparent electrodes 4 and 5 are deposited which can cover plates either with a continuous layer or partially, e.g., as either identical or different elements of any shape. On top of the transparent electrodes 4 and 5, the layers 6 and 7 of polymer or other material are deposited. The surfaces of those layers are made direction-anisotropic by rubbing or otherwise, to maintain orientation of molecules of the liquid crystal. On the external sides of plates, the polarizers 8 and 9 are located transparent in the UV spectral region. From the external side of the polarizer 8, a layer is deposited of one or several luminescent dyes 10 emitting luminescence in different spectral bands in the visible range. To eliminate the undesirable luminescence of the layer 10 caused by UV illumination by outside daylight, an additional layer 13 is deposited on top of the luminescent layer 10, which serves as a filter not transmitting this UV illumination. The radiation emitted by the radiation source, either external or included in the display, is schematically shown with arrows.

In Fig.2, an LC display is schematically shown in which the layer of luminescent dyes is located on the polarizer at the back side of the display. Then, both the polarizer and the plates are transparent in the visible range of the spectrum, and do not transmit its UV part.

In Fig.3, the design of the display is presented with the polarizers 8 and 9 and the layer of luminescent dyes 10 is located inside the LC display. The two polarizers, each having the form of a thin layer of homogeneously oriented dye molecules, are deposited onto a sublayer 11 separating the transparent electrode 4 from the polarizing layer 8 (front plate 1), and onto the surface of the luminescent dye layer 10, which is placed directly on the transparent electrodes 5 of the back plate 2. The polarizing layers in this embodiment are effective in the visible spectral range and are not transparent in the UV range. The material of the top plate 1 can be opaque in the UV range, but the plates 2 need to be transparent in both visible and UV spectral ranges.

In Fig. 4, another embodiment of the transmissive LC display with internal location of optical elements is shown, in which the layer of luminescent dyes 10 is located on the internal side of the top (front) plate 1. Then the polarizing layers 8 and 9 should be effective only in the UV spectral range, and requirements to optical properties of the plates 1 and 2 are the same as those of the previous embodiment. It is obvious that the matrices of luminescent dyes in Figures 3 and 4 can be placed on the external sides of the appropriate plates. Then, both plates should be transparent either in the visible spectral range only (Fig.3), or in both visible and UV ranges (a version of Fig.4).

In the reflective embodiment of the LC display, the polarizer, the layer of dyes emitting luminescence, and the reflector can also be placed either on the external or on the internal side of the back plate 2. In Fig.5, the design is shown of the display with external location of the polarizer, the layer emitting luminescence, and the diffuse reflector. In this case, both polarizers 8 and 9 are placed on the external sides of the plates 1 and 2. The layer of luminescent dyes 10 is then placed between the polarizer 9 and the reflector 12. The polarizers 8 and 9 and the plates 1 and 2 should be transparent in both UV and visible spectral ranges.

When the location of the optical elements is internal (Fig.6), the reflector 12 is first formed on the plate 2. Then, a matrix of the layer emitting luminescence 10, and the polarizer 9 on its top, are formed. This plate can be made either from either a transparent or an opaque material, for example, of crystalline silicon. A diffusely reflecting layer is formed on the plate, which becomes the reflector 12. The diffusely reflecting layer can be obtained by depositing a polymer film onto an aluminium mirror, the film containing particles of either arbitrary or definite shapes and sizes, with the refraction index different from that of the polymer. Other methods of obtaining the diffusely reflecting layer include depositing a polymer film containing a suspension of aluminium powder or other material efficiently reflecting light or creating an embossment on the surface of the plate onto which the reflecting layer 12 will then be deposited, for example, an aluminium film. The embossment can be formed by processing a surface by an abrasive material, etching, impression, depositing a polymeric film containing particles of definite shapes and sizes, or by selectively etching, through a mask, either the plate surface itself, or a film of polymer or other material deposited onto it. The aluminium film can at the same time serve as a continuous electrode. By etching a narrow strip of aluminium along a fixed outline 10-100 microns wide using photo-lithography, it is possible to obtain electrodes of the necessary configuration, for example, a rectangular matrix of electrodes for flat matrix displays screens, while maintaining the common reflective background over the entire working field of the indicator. The layer emitting luminescence 10 is deposited directly onto the reflecting coating or onto a sublayer, which is formed on the reflector. The polarizing layer is deposited either directly onto the layer of dyes emitting luminescence 10, or onto a smoothing sublayer, which is formed on the luminescent layer.

If the reflecting layer, for any reasons, cannot be used as the electrode, or it is made of a non-conducting material, the electrodes should be deposited onto an insulating sublayer, or directly onto the reflector. It is possible to use polymeric film, aluminium oxide, silicon oxide, or other dielectric materials as the insulating layer material. Then, the layer emitting luminescence can be deposited on both the reflector and the electrodes.

The layer containing the dye emitting luminescence can be made using either a single phosphor or a mixture of phosphors. Then, the layer can be made either homogeneous over the whole area, or to have at least some sites containing at least one phosphor. For example, the layer can be a matrix with rectangular elements (sites). Besides, different sites can have either an identical color, or can be implemented in different colors, i.e. can be manufactured using different phosphors.

In Fig.7, a design of the display is presented, in which the function of the external polarizer is performed by a layer 10 containing homogeneously oriented molecules of a dye emitting luminescence. Then the layer emitting luminescence will acquire polarizing properties.

The proposed designs of the LC display can be implemented using twist, supertwist, or smectic LC structures, with various schemes of controlling the character-synthesizing elements or the screen scan. As the luminescent dyes, organic or inorganic phosphors can be used emitting luminescence in the solid state or in a polymeric matrix, in the visible spectral range of 400-700 nm under action of UV-range radiation in the range of 200-450 nm.

To improve color saturation, the entire colored layer as well as its individual sites, for example, color matrix elements or picture elements, can be manufactured from either a mixture of dyes omitting luminescence and the usual dyes absorbing in the visible range, or by depositing them level-by-level. Then, the color of radiation emitted by the phosphor and the range of dye absorption should be selected so as to ensure the largest color saturation and brightness of the image. For the level-by-level deposition, the layer of absorbing dye can be located either inside or outside of the display, with properly coordinated arrangement of the elements.

To obtain an oriented layer of luminescent dyes, a polymeric film can be used, for example, a polyvinyl alcohol film colored with organic phosphors and then stretched. The molecules of phosphor can also be made water-soluble by binding them to ionogenic groups. That will allow to transfer the solution of phosphor molecules to the liquid crystalline mesophase, and to orient them in a thin layer along, at least, one of molecular axes using mechanical shift, oriented substrate surface, or external electromagnetic fields.

A color matrix or picture can be made by consecutive thermal deposition of dyes, either through a mask or by other methods, by selectively coloring a polymer layer with the appropriate dye, or by depositing a dye layer using either stenciling or other printing methods.

Depending on the design of the display and the used dyes, the used polarizer should have the appropriate optical properties. In some designs, it can be effective only in the visible band of the spectral range while not transmitting UV radiation, in others - to transmit in bath UV and visible ranges, or transmitting only in the UV range but not in the visible spectral range. As such polarizers, stretched polymeric films can be used with the molecules absorbing radiation in the UV spectral range introduced into them, as well as polarizing layers which have been obtained on the basis of the liquid crystalline states of substances whose molecules absorb radiation of the UV spectral range. Such polarizing layers can be made by one of the known techniques [2-4]. In particular, they can be based on specific organic dyes, whose solutions can form lyotropic LC states [5]. In addition, they can perform the function of the focusing layer for the liquid crystal. To obtain a polarizer effective only in the UV range of the spectrum while not transmitting the visible part, a polarizer can be used working in the UV and visible ranges, or only in the UV range, but transmitting the visible part of the spectrum without polarization, together with an optical filter excluding the visible part of the spectral range. Such a filter can be implemented by adding the appropriate organic or inorganic dye to the material composition of the display plates, or by depositing, in the appropriate location, an isotropic layer of dye or a polymer film colored with dye absorbing light in the visible spectral range, or, if a film of oriented dye is used as the polarizer, by introducing the appropriate dye into the polarizer material or the polarizing layer. When the filter is manufactured in the form of an absorbing isotropic layer, it can be placed anywhere in the device between the layer containing the luminescent dyes and the light source.

A variety of radiation source types can be used for both visible and UV spectral ranges including gas discharge lamps with mercury, hydrogen, or xenon fillings, plasma and laser light sources, arc discharge etc. Then the source of radiation can either be directly included into the claimed device composing a combined design, or to be comprised in the devices in which the claimed liquid crystal device is used. For example, if it is used as a modulator, the radiation source can be included into the design of the device in which this modulator is used.

Consider the principle of operation of the LC display with a layer emitting luminescence using the transmissive embodiment of the LC display based on a nematic twirled to 90° (Fig. 1) as an example. A flux of non-polarized UV radiation falls onto the display from the side of the second (back) plate 2. After passing through the polarizer 9, which transmits only the UV part of radiation, the radiation becomes polarized, and passes through the plate 2, the transparent electrode 5, and the focusing layer 7. If no voltage is applied to the electrodes, the polarized light is transmitted through the liquid crystal layer 3, which rotates the polarization plane by 90°, and then is transmitted, without attenuation, through the focusing layer 6, the transparent electrode 4, the plate 1, the UV polarizer 8, and reaches the luminescent dye layer 10 causing it to emit luminescence. When voltage is applied to the electrodes, the twirled form of the nematic transforms, under the action of electric field, into the homeotropic form, in which the optical axis of the nematic is oriented perpendicularly to the planes of plates 1 and 2, and the nematic no longer rotates the light polarization plane for the light passing through it. This means that, when light passes through the layer of nematic, the directions of the light polarization plane set by the polarizer 9 will not change, and will be perpendicular to the polarization direction of the second polarizer 8 when leaving the nematic 3. When the light passes through the polarizer 8, it is absorbed, and does not cause luminescence in the next layer 10. Then, this area will look dark when sight-checked. In the areas of the display containing no electrodes, the twirled form of nematic will always be preserved, and these areas will always emit i.e. look bright. By placing the layer emitting luminescence on the external surface of the display, contrast of the image is made independent of the observation angle, since the flux of light forming the image will be emitted by the external surface of the display, and will not transmit through its light-transforming layers (the liquid crystals and the polarizer).

When the layer of luminescent dyes is placed on the back side of the display (Fig.2), i.e. on the external surface of the plate 2, the flux of UV radiation will be transformed by the layer emitting luminescence into visible-range light. Further propagation of the latter light through the LC display and the control principle remains the same as in the usual LC display. To use the visible part of emission spectrum, it is possible to introduce additional dyes into the layer of luminescent dyes absorbing in the visible spectral range complementary to the emission spectrum of the luminescent dyes. The layer of absorbing dyes with the element arrangement correlated with that of the appropriate elements of the layer of luminescent dyes can be located on the internal surface of the display's plate 2.

The operation principle of the transmissive-type display with the internal location of the polarizer and the luminescent matrix (Fig.3 and 4) remains the same as for the external location of elements. When the layer of luminescent dyes is located on the front plate 1 (Fig.4), the UV radiation passes through the back plate 2, the transparent electrode 5, the insulating layer 11, and the polarizer 9 working in the UV range. Then the light it passes through it, with or without 90° rotation of the polarization plane, depending on the state of the liquid crystal in the layer 3. If the polarization plane has been rotated (opened state), light passes, without absorption, through the second polarizer 8, and falls onto the layer emitting luminescence 10 bringing about luminescence of the appropriate elements of the matrix. The visible light that has been emitted leaves the limits of the display through the transparent electrode 4 and the plate 1. In the closed state, the UV radiation is absorbed by the polarizer 8, and luminescence of the luminescent matrix does not arise. This causes the display or the appropriate matrix elements to become dark.

In the reflective embodiment of the display (Fig.5), light passes through the polarizer 8 transparent in UV and visible range, and becomes polarized by it in both UV and visible ranges. Further, the light passes through the plate 1, the transparent electrode 4, and the focusing layer 6. In the opened state, light passes through the layer of liquid crystal 3 rotating the polarization plane by 90°, through the focusing layer 7, the transparent electrode 5, the plate 2 and, without absorption, the polarizer 9. Then, part of light is absorbed by the luminescent dye of the layer 10, becoming transformed to visible light The remaining part of the light is reflected from the reflector 12, and again passes through the layer of luminescent dyes, becoming additionally transformed to visible light The emitted visible-range light is polarized by the polarizer 9, passes through the plate 2, the transparent electrode 5, the focusing layer 7, the liquid crystal layer 3 rotating the polarization plane, and leaves unhindered through the remaining layers and the polarizer 8. When the state of the LC layer is closed, so it does not rotate the polarization plane of the passing light, the light in both UV and visible ranges is absorbed by the second polarizer 9. This prevents the luminescent dyes in the layer 10 from radiating light, and the display looks dark. To avoid weakening color saturation of luminescent light by the visible range light it is possible to introduce the appropriate absorbing dyes into the layer of dyes emitting luminescence, as described above for the transmissive embodiment of the display.

The principle of operation of the reflective display with an internally located polarizer and the layer of luminescent dyes (Fig.6) does not essentially differ from the previous case.

In case of the display with an oriented layer of luminescent dyes (Fig.7), when the liquid crystal is in the twirled nematic state, the polarized UV radiation passes through all the layers of the display, with the polarization plane rotated by 90°, and leaves, without absorption, through the phosphor layer. To prevent UV light from reaching the eyes of the observer, the layer of luminescent dyes is covered with the filter 13 absorbing UV radiation and transmitting the visible spectral range. When the liquid crystal 3 is not in the twirled state, the UV radiation polarized by the polarizer 9 passes through the display without changes in polarization, and becomes absorbed by the layer of oriented phosphor molecules causing light emission in the visible spectral range. It is obvious that, using the same principle of operation, it is possible to construct a display with the layer of oriented phosphor molecules located on the first plate, but inside the display.

For both transmissive and reflective displays types, intermediate embodiments are possible with varying locations of the polarizer and the luminescent dye matrix layer. Thus, for example, in the transmissive-type displays in Fig.1 and Fig.4, it is possible to position the polarizers inside the displays, while the layer containing the dye emitting luminescence will be placed on the external side of the plate 1. Similar arrangement can be implemented in embodiments of Fig.2 and 3, and Fig.5 and 6.

An essential feature of this invention is that the devices used for manufacturing LC devices are including a wider device class than the one described above. Besides, the light source used should preferably have a maximum of the emission spectrum in the 200-450 nm range. The polarizers used should be effective in both visible and UV spectral ranges, and layers should contain luminescent dyes transforming UV into visible radiation. This allows to more efficiently use energy of the sources emitting in both UV and visible spectral ranges.

### Sources of information referred to while drawing up the application

1. USA Patent No 5,528.398, Cl.359-68, published in 1996.- the prototype
2. USA Patent No 2,400,877, Cl. 350-155, published in 1946.
3. Japan Patent No. 1-183602 (A), G02B 5/30, G02B 1/08, published in 1989.
4. USA Patent No 3,941,901, Cl. 350-160, published in 1976.
5. Application PCT/US 94/05493, published in 08.12.94.

## Claims

1. A liquid crystal display containing a layer of liquid crystal placed between the front and the back plates, with at least one electrode and one polarizer attached to each of the plates, and a layer containing at least one dye in at least on one area, wherein either a dye emitting luminescence under action of UV radiation in the 400-700 nm band, or a mixture of at least one dye emitting luminescence and at least one absorbing dye, is used as at least of one of the dyes.

2. A display of Claim 1, wherein a source of radiation is introduced emitting in UV and visible spectral ranges, with an emission maximum in the range of 200-450 nm.

3. A display of Claim 2, wherein a radiation source is mounted from the front panel side.

4. A display of Claim 2, wherein a source of radiation is mounted from the back panel side.

5. A display of Claims 1 or 4, wherein a layer containing at least one dye emitting luminescence is mounted on the external side of one of the plates, and the polarizer located on the same plate is placed either on its internal surface, or between its external surface and the layer containing at least one dye emitting luminescence.

6. A display of Claims 1 or 4, wherein a layer containing at least one dye emitting luminescence is located on the internal side of one of plates, the polarizer located on the same plate being placed between the layer containing at least one dye emitting luminescence, and the liquid crystal layer.

7. A display of Claims 1 or 3, wherein a reflector is installed mounted on the internal or the external side of the back surface of the plate, and the layer containing at least one luminescent dye is located between the reflector and the polarizer located on the same plate.

8. A display of Claims 1 or 4, wherein the layer containing at least one dye emitting luminescence is located on the front plate) and both this layer and the polarizer located on the same plate are implemented as a single polarizing layer containing molecules of at least one dye emitting luminescence, which are homogeneously oriented along at least one molecular axis, with the layer located on either the external or the internal side of the front plate.
